# EUROPEAN PATENT APPLICATION

(11) **EP 1 683 631 A1**
(43) Date of publication of application: **26.07.2006**
(21) Application number: 05100467.9
(22) Date of filing: 25.01.2005
(51) Int. Cl.: B32B 27/32, B32B 1/08

(54) **Multilayer structures**

(71) Applicant: Borealis Technology Oy, 06201 Porvoo (FI)
(72) Inventor: Stadlbauer, Manfred, Dr., 4040 Linz (AT); Reichelt, Norbert, Dr., 4501 Neuhofen/Krems (AT); Pham, Tung, Dr., 4040 Linz (AT); Wolfsberger, Anton, 4210 Gallneukirchen (AT)
(74) Representative: VA TECH Patente GmbH & Co

(57) **Abstract**

The invention refers to multilayer structures which are comprised of at least two layers, where at least one layer comprises an ethylene polymer and at least one further layer comprises a propylene random copolymer having long chain branches.

## Description

The present invention refers to multilayer structures which are comprised of at least two layers, where at least one layer comprises an ethylene polymer and at least one further layer comprises a propylene random copolymer having long chain branches.

Many applications require the combination of properties, typical for polyethylene homo- and copolymers such as toughness, optical properties, impact strength, sealing-behaviour and melt strength, with the properties of polypropylene such as stiffness, chemical resistance, and temperature resistance. However, the adhesion of polyethylene and polypropylene is weak, which limits the properties of multilayer structures comprising polyethylene and polypropylene. Multilayer film, blown-film, extrusion coatings, pipes, injection moulded or blow-moulded articles do not perform to their full potential due to a lack of phase adhesion between polyethylene and polypropylene. Improved phase adhesion is further useful in wire and cable applications such as coatings for coaxial cables, multipair cables for data or telecommunication, fibre optical cables (e.g. buffer tube, loose tube, central tube and slotted core constructions), especially for multilayer constructions made of multiple materials.
A good phase adhesion between polyethylene and polypropylene is also required for cable jacketing, in particular multilayer jacketing, with e.g. a surface coating of polypropylene for increased rodent resistance.

### Object of the invention

It is therefore the object of the invention to provide a multilayer structure, which has an improved adhesion between layers comprising polyethylene and layers comprising polypropylene.

The above object was achieved by a multilayer structure, comprising
a) at least one layer A comprising an ethylene polymer,
b) at least one layer B comprising a propylene random copolymer having a branching index g' ≤ 0.90, where layer B is immediately adjacent to layer A.

Surprisingly, the multilayer structures of the invention are characterised by an improved phase adhesion between the at least one layer A comprising polyethylene and the at least one layer B comprising polypropylene. The good phase adhesion shows itself by a number of properties which are directly or indirectly related to the strength of the bond between polyethylene- and polypropylene layer. These properties include sealing strength, tear strength, impact properties (including falling dart), surface stability and blushing behaviour.

According to the invention, the propylene random copolymer of layer B has long chain branches. The amount of branching is determined using the weight average branching index g' of the branched propylene copolymer. The weight average branching index g' is defined as g' = [lV]_{br}/[lV]ₗᵢₙ|_{Mw} in which g' is the weight average branching index, [lV]_{br} is the intrinsic viscosity of the branched polypropylene and [IV]ₗᵢₙ is the intrinsic viscosity of the linear polypropylene having substantially the same weight average molecular weight as the branched polypropylene. It is well known in the art that as the g' value decreases, branching increases. See B.H. Zimm and W.H. Stockmayer, J. Chem. Phys. 17, 1301 (1949).
Typically, the branching index g' of the propylene random copolymer which is used for the multilayer structures of the present invention is in the range of from 0.60 to 0.90.
Preferably, the branching index g' of the propylene random copolymer which is used for the multilayer structures of the present invention is less than 0.88.
More preferably, the branching index g' of the propylene random copolymer which is used for the multilayer structures of the present invention is less than 0.85.
Most preferably, the branching index g' of the propylene random copolymer which is used for the multilayer structures of the present invention is less than 0.80.

According to an important aspect of the invention the layer B is immediately adjacent to layer A. It was observed, that for achieving good phase adhesion between layer B and layer A, it is not necessary to use an intermediate adhesive layer. This allows to produce the multilayer structures of the invention more cost efficiently than with the use of adhesive layers. A further advantage of not having to use an adhesive layer is, that any potential detrimental effects which the adhesive layer could have on e.g. optical properties, suitability for food-contact applications, etc. are avoided.

Preferably, the random copolymer of layer B of the present invention is a copolymer of propylene with ethylene and/or α-olefins having 4-12 carbon atoms.

Preferably, the propylene random copolymer has an MFR of 0.1 to 50 g/10 min (230 °C, 2.16 kg).

Preferably, the comonomer in the propylene random copolymer is ethylene. It is further preferred, that the propylene random copolymer has an ethylene content of 1 to 6 wt%.

The preferred ethylene content has been observed to be best suited for improving the adhesive properties of the layer B comprising the propylene random copolymer having a branching index g' ≤ 0.90 and layer A comprising the ethylene polymer. Propylene random copolymer with branching index g' ≤ 0.90 having lower ethylene contents than 1 wt% are not suited for improving the phase adhesion to layer A comprising the ethylene polymer. Propylene random copolymer with branching index g' ≤ 0.90 having higher ethylene contents than 6 wt% are also not suited for improving the phase adhesion to layer A comprising the ethylene polymer. Propylene copolymers having ethylene contents above 6 wt% are usually not considered as random copolymers. These polymers usually are impact copolymers, having a continuous matrix phase and a discontinuous phase dispersed therein. Propylene impact copolymers with branching index g' ≤ 0.90 are also not suited for improving the phase adhesion to layer A comprising the ethylene polymer.

According to an embodiment of the multilayer structures of the invention, layer B comprises 5 - 50 wt% of the propylene random copolymer having a branching index g' ≤ 0.90 and 50 - 95 wt% of a propylene polymer.
A propylene random copolymer having a branching index g' ≤ 0.90 is advantageously used in a blend with one or more further propylene polymers. The further propylene polymers may be any one or more of propylene homopolymers or copolymers. These propylene polymers may be either isotactic or syndiotactic or mixtures of such polymers. The propylene copolymers comprise copolymers with ethylene and/or α-olefins having 4-12 carbon atoms. The copolymers may further comprise random copolymers and block copolymers. According to this advantageous embodiment, suitable propylene homo- and/or copolymers are chosen to comprise from 50 - 95 wt% of layer B in order to achieve multilayer structures having the desired properties. Such propylene homo- and/or copolymers are commercially available or can be easily produced according to procedures which are well known in the art, see e.g. Moore, E. P., Polypropylene Handbook, Hanser, New York, 1996, pages 11 - 98.

With regard to the above described embodiment, it is preferred, that layer B comprises 50 - 95 wt% of a propylene homo- and/or block copolymer.
The increase in phase adhesion results in an increase in impact strength. It has been observed that the synergistic effect of increased impact strength of the multilayer structures is most pronounced when layer B comprises 50 - 95 wt% of a propylene homo- and/or block copolymer.

Preferably, layer B of a multilayer structure of the present invention comprises at least 60 wt% of the sum of the weights of layers A and B.

It is preferred for the multilayer structures of the present invention, that the layer B comprising the propylene polymer(s) is predominant in mass and also predominant in contributing to the properties of the multilayer structure.

For two layer structures it is preferred, that the layer B comprises at least 75 wt%, more preferably at least 80 wt% of the multilayer structure.

For three layer structures, having an A/B/A structure, it is preferred, that the layer B comprises at least 60 wt%, more preferably at least 70 wt% of the multilayer structure.

A preferred embodiment of the present invention are multilayer pipes. It is especially important for polypropylene pipes having a coating of polyethylene, that the layers have a good adhesion.

A further preferred embodiment of the present invention are multilayer films.

### The multilayer structures of the present invention

### Production of propylene random copolymer

The propylene random copolymer may be produced by single- or multistage process polymerisation of propylene and ethylene and/or α-olefin such as bulk polymerisation, gas phase polymerisation, slurry polymerisation, solution polymerisation or combinations thereof using conventional catalysts. A random copolymer can be made either in loop reactors or in a combination of loop and gas phase reactor. Those processes are well known to one skilled in the art.
A suitable catalyst for the polymerisation of the propylene polymer is any stereospecific catalyst for propylene polymerisation which is capable of polymerising and copolymerising propylene and comonomers at a temperature of 40 to 110°C and at a pressure from 10 to 100 bar. Ziegler Natta catalysts as well as metallocene catalysts are suitable catalysts.
One skilled in the art is aware of the various possibilities to produce propylene homo- and copolymers and will simply find out a suitable procedure to produce suitable polymers which are used in the present invention, see e.g. Moore, E. P., Polypropylene Handbook, Hanser, New York, 1996, pages 89-91. In accordance with the present invention, a linear propylene random copolymer is used or a polymerisation process is chosen which results in the formation of linear propylene random copolymer.

### Production of propylene random copolymers with g' ≤ 0.90

Propylene random copolymers having long chain branches are produced starting with linear propylene random copolymers.
The propylene random copolymer with long chain branches is preferably produced by mixing the linear propylene random copolymer, which is in a particulate shape, with an effective amount of an organic peroxide at a temperature of from 30 - 100 °C. The peroxide must be decomposable at higher temperatures and serves as free-radical generator. Preferred peroxides are acyl peroxides, alkyl peroxides, hydroperoxides, peresters and/or peroxycarbonates. The peroxides may be applied in pure form or in a solution of an inert organic solvent. Preferably, the amount of peroxide is 0.05 to 3 wt%, based on the weight of the random copolymer.
Volatile bifunctional monomers are absorbed by the particulate copolymer from the gas phase at temperatures of from 20 - 120°C, preferably from 70 - 90 °C. Preferably, the amount of bifunctionally unsaturated monomer is from 0.01 to 10 wt%, more preferably from 0.05 to 2 wt%, based on the weight of the random copolymer.
The mixture containing the peroxide and the bifunctional monomers is heated and molten at a temperature of up to 210°C, preferably in an atmosphere comprising inert gas and/or volatile bifunctional monomer. The peroxide is decomposed and reactions between the resulting free radicals, the polymer chains and the bifunctional monomers occur.
Finally, the melt is heated to 220 - 250 °C in order to remove unreacted monomers and decomposition products. The heating and melting steps are preferably performed in continuous kneaders or extruders, with preference in twin-screw extruders.
The molten random propylene copolymer with long chain branches is then cooled and pelletised.
The average sorption time of the volatile bifunctional monomers on the particulate random copolymer is advantageously from 10 to 1000 seconds, preferably from 20 to 800 seconds, particularly preferably from 60 to 600 seconds. The absorption of the volatile bifunctional monomers is preferably performed in continuous through-flow mixers.
Examples of suitable organic peroxides are:
- Acyl peroxides, such as benzoyl peroxide, 4 chlorobenzoyl peroxide, 3 methoxybenzoyl peroxide and/or methylbenzoyl peroxide;
- Alkyl peroxides such as allyl tert butyl peroxide, 2,2 bis(tert-butylperoxybutane), 1,1 bis(tert-butylperoxy)-3,3,5 trimethylcyclohexane, n butyl 4,4 bis(tert-butylperoxy)valerate, diisopropylaminomethyl tert-amyl peroxide, dimethylaminomethyl tert-amyl peroxide, diethylaminomethyl tert-butyl peroxide, dimethylaminomethyl tert-butyl peroxide, 1,1 di(tert-amylperoxy)cyclohexane, tert-amyl peroxide, tert-butyl cumyl peroxide, tert-butyl peroxide, and/or 1 hydroxybutyl n butyl peroxide;
- Peresters and peroxycarbonates, such as butyl peracetate, cumyl peracetate, cumyl perpropionate, cyclohexyl peracetate, di tert-butyl peradipate, di tert-butyl perazelate, di tert-butyl perglutarate, di tert-butyl perphthalate, di tert-butyl persebacate, 4 nitrocumyl perpropionate, 1 phenylethyl perbenzoate, phenylethyl nitroperbenzoate, tert-butyl bicyclo[2.2.1]heptanepercarboxylate, tert-butyl 4 carbomethoxyperbutyrate, tert-butyl cyclobutanepercarboxylate, tert-butyl cyclohexylperoxycarboxylate, tert-butyl cyclopentylpercarboxylate, tert-butyl cyclopropanepercarboxylate, tert-butyl dimethylpercinnamate, tert-butyl 2 (2,2 diphenylvinyl)perbenzoate, tert-butyl 4 methoxyperbenzoate, tert-butyl perbenzoate, tert-butyl carboxycyclohexane, tert-butyl pernaphthoate, tert-butylperoxy isopropyl carbonate, tert-butyl pertoluate, tert-butyl 1 phenylcyclopropylpercarboxylate, tert-butyl 2 propylperpenten-2 oate, tert-butyl 1 methylcyclopropylpercarboxylate, tert-butyl 4 nitrophenylperacetate, tert-butyl nitrophenylperoxycarbamate, tert-butyl N succinimidopercarboxylate, tert-butyl percrotonate, tert-butylpermaleic acid, tert-butyl permethacrylate, tert-butyl peroctoate, tert-butylperoxy isopropyl carbonate, tert-butyl perisobutyrate, tert-butyl peracrylate and/or tert-butyl perpropionate;
and mixtures of these peroxides.
Volatile bifunctional monomers which are preferably used for the preparation of the propylene random copolymer with long chain branches include:
- divinyl compounds, such as divinylaniline, m divinylbenzene, p divinylbenzene, divinylpentane and/or divinylpropane;
- allyl compounds, such as allyl acrylate, allyl methacrylate, allyl methyl maleate and/or allyl vinyl ether;
- dienes, such as butadiene, chloroprene, cyclohexadiene, cyclopentadiene, 2,3 dimethylbutadiene, heptadiene, hexadiene, isoprene and/or 1,4 pentadiene;
and mixture of these monomers.
Especially preferred are butadiene, isoprene, dimethylbutadiene and/or divinylbenzene.

During the preparation of the modified olefin polymers, the heating and melting of the polyolefin particles within which the bifunctionally unsaturated monomers and the acyl peroxides, alkyl peroxides, hydroperoxides, peresters and/or peroxycarbonates have been sorbed as free-radical generators capable of thermal decomposition takes place in an atmosphere of the volatile bifunctionally unsaturated monomers, preferably in continuous kneaders or extruders, with preference in twin-screw extruders.

As a result of the process for producing the propylene random copolymer having g' ≤ 0.90, the MFR, compared to the starting material, is increased. Depending upon the melt strength of the starting material, the melt strength of the produced long chain branched random copolymer may be increased, decreased or substantially unaltered.

### Production of ethylene polymers

Ethylene polymers which may be used for layers a) of the multilayer structures of the present invention comprise HDPE, LDPE, LLDPE, VLDPE, etc. The layer A may comprise any one or mixtures of two or more of the aforementioned ethylene polymers.

It is preferred to use ethylene polymers which are commercially available, e.g. FG5190, FT5230 from Borealis A/S. Alternatively, suitable ethylene polymers may be produced according to the following descriptions.

Low density polyethylene may be produced by free-radical-initiated polymerization using free radical initiators such as peroxide or oxygen in high pressure processes. The polymerization is carried out in tubular or stirred autoclave reactors at a temperature of about 130 to 330 °C and at a pressure around 700 to 3000 bars.

Linear low density polyethylene is made by the copolymerisation of ethylene and α-olefins. It may be produced in low pressure processes such as gas-phase process (for which the Unipol technology is a typical example), a solution-phase polymerisation process, a slurry process, or combinations thereof like staged gas phase (Union Carbide), staged slurry/gas phase (Borealis) or staged solution phase (Nova). A suitable catalyst for the polymerisation of LLDPE is any stereospecific catalyst which is capable of polymerising and copolymerising ethylene and comonomers. Ziegler-Natta as well as metallocene catalysts are suitable catalysts. In the gas-phase process, reactor temperatures are usually below 100 °C with pressures of about 20 bars. In the solution process, reactor temperatures are usually 170-250 °C with pressures of 40 - 140 bars. In the solution-phase polymerisation process, reactor temperatures are usually 70 - 110 °C with pressures of 30 - 50 bars.

### Preparation of multilayer pipes

The technique of producing multilayer pipes is well known. Multilayer pipes comprising 2 or 3 layers with, for example, a diameter of 110 mm and a pipe wall thickness of, for example, 10 mm are made with conventional Cincinnati pipe extrusion line equipment with a multilayer tool. The running speed is, for example, 1.3 m/min and the melt temperature, for example, 210 °C.

### Preparation of coextruded blown films

The technique of blown film extrusion is well known for the production of thin plastic films. In a typical process, plastics, such as low, linear low, and high density polyethylene (LDPE, LLDPE, and HDPE) are extruded through a circular die to form a film. Air is introduced through the centre of the die to maintain the film in the form of a bubble which increases the diameter of the film 2 to 6 fold, after which the bubble is collapsed onto rollers. There are a number of variations of such a process within the skill in the art, for instance as described in such references as US 3,959,425 ; US 4,820,471 ; W. D. Harris, et al in "Effects of Bubble Cooling on Performance and Properties of HMW-HDPE Film Resins", Polymers Laminations & Coatings Conference, Book 1, 1990, pages 306-317 ; and, Moore, E. P., Polypropylene Handbook, Hanser, New York, 1996, pages 330-332. For instance, cooling is often advantageously modified because polypropylene cools and crystallizes at a rate different from that of polyethylene. Therefore, adjustments to the cooling parameters often produce a more stable bubble at desired output rates.
In the formation of blown films, a melt enters a ring-shaped die either through the bottom or side thereof. The melt is forced through spiral grooves around the surface of a mandrel inside the die and extruded through the die opening as a thick-walled tube. The tube is expanded into a bubble of desired diameter and correspondingly decreased thickness as previously described.

The formation of coextruded blown films is known in the art and applicable to the present invention. Articles illustrative of the art include Han and Shetty, "Studies on Multilayer Film Coextrusion III. The Rheology of Blown Film Coextrusion", Polymer Engineering and Science, February, (1978), vol. 18, No. 3 pages 187-199 ; and Morris, "Peel Strength Issues in the Blown Film Coextrusion Process" 1996 Polymers, Laminations & Coatings Conference, TAPPI Press, Atlanta, Ga. (1996), pages 571-577.
The term "coextrusion" refers to the process of extruding two or more materials through a single die with two or more orifices arranged such that the extrudates merge together into a laminar structure, preferably before chilling or quenching. Coextrusion systems for making multilayer films employ at least two extruders feeding a common die assembly. The number of extruders is dependent upon the number of different materials comprising the coextruded film. For each different material, a different extruder is advantageously used. Thus a five-layer coextrusion may require up to five extruders although less may be used if two or more of the layers are made of the same material.
Coextrusion dies are used to form coextruded blown films. They have multiple mandrels that feed the different melt streams to the circular die lip. When feedblocks are employed to stack melt layers from two or more extruders, the resulting multilayered melt stream is then fed to the film die.

The multilayer films of the present invention can be formed into pouches, bags, containers and the like using packaging machinery within the skill in the art such as heat sealing devices using mandrels and the like. Pouches, bags and other containers made from this combination of materials provide excellent toughness and impact strength. The multilayer films of the present invention can be used as a packaging substrate alone, as a liner in multi-wall bags, or a strength/sealant ply in laminated structures such as with polyethylene terephthalate or biaxially oriented polypropylene.

Multilayer film, including blown-film, extrusion coatings, multilayer pipes, coated injection moulded or blow-moulded articles are embodiments of the present invention. The invention is further used in wire and cable applications such as coatings for coaxial cables, multipair cables for data or telecommunication, fibre optical cables (e.g. buffer tube, loose tube, central tube and slotted core constructions). A further application of the invention is cable jacketing, in particular multilayer jacketing.
Any type of structure, which is comprised of at least two polymer materials being physically adjacent to each other (but not being a blend or composition), including the above embodiments are encompassed by the meaning of the expression "multilayer structure".

### Measurement Methods

### MFR

The melt flow rates were measured with a load of 2.16 kg at 230 °C for polypropylene and at 190 °C for polyethylene. The melt flow rate is that quantity of polymer in grams which the test apparatus standardised to ISO 1133 extrudes within 10 minutes at a temperature of 230 °C or 190 °C respectively, under a load of 2.16 kg.

**Comonomer contents** were measured with Fourier transform infrared spectroscopy (FTIR) calibrated with ¹³C-NMR.

### Molar mass measurement

Molar mass measurements were performed with a GPC method according to ISO 16014-4 at a temperature of 145 °C using 1,2,4-trichlorobenzene as solvent.

### Intrinsic Viscosity

Intrinsic Viscosity was measured according to DIN ISO 1628-1 (October 1999) in Decalin at 135 °C.

### Tensile Test

Tensile test was performed according to ISO 527-3 on blown films.

### Elmendorf

Elmendorf was determined according to ISO 6383/2 (1983) on blown films.

### Examples

### Production of propylene random copolymer with branching index ≤ 0.90

In a first step, a linear propylene random copolymer is produced in a multistage process polymerisation of propylene and ethylene in a combination of loop and gas phase reactor. A Ziegler Natta catalyst has been used, the reaction temperature is 70°C. The concentration of propylene and ethylene was chosen accordingly to give a final incorporation of 5 percent by weight ethylene in the random copolymer and a MFR_{230/2.16} of 1.8 g/10 min (polymer 4 in table 1).

Powder as obtained from such or similar polymerisation process is impregnated with 0.25 wt% tert-butylperoxy isopropyl carbonate and 0.5 wt% 1,4-divinylbenzene at 100 °C for 15 minutes. The mixture is heated to a temperature of 200 °C under inert gas atmosphere (Nitrogen) and is then further heated to 230 °C and subsequently granulated. The obtained polymer shows an MFR_{230/2.16} of 2.9 g/10min and a branching index g' of 0.8.

The propylene polymers listed in table 1 were used for the examples.

**Table 1**

| polymer | polymer type | MFR | C2 | g' |
|---|---|---|---|---|
| | | [g/10 min] | [wt%] | |
| polymer 1 | homopolymer | 4.0 | 0 | - |
| polymer 2 | block copolymer | 3.0 | 5 | - |
| polymer 3 | random copolymer | 1.9 | 5 | - |
| polymer 4 | random copolymer | 1.8 | 5 | - |
| polymer 5 | random copolymer | 2.9 | 5 | 0.8 |

The ethylene polymer, which was used in the examples was a LLDPE, having a melt flow rate MFR_{190/2.16} 1.3 g/10min, a density of 934 kg/m³. The comonomer was 1-butene.

According to the invention, an advantageous embodiment of the inventive multilayer structures are multilayer films. A number of multilayer films was therefore produced according to the following procedure.

Three-layered blown films were produced on a line with three single screw extruders with a barrel diameter of 70 mm and a round-section die of 200 mm, operated with a screw speed of 50 rpm yielding an output of 100 kg/hr, using a multilayer tool in combination with air cooling. Melt temperature was 220 °C in the die; the temperature of the cooling air was kept at 25 °C and the blow up ratio (BUR) 1.8:1. A film thickness of 60 µm was adjusted through the ratio between extruder output, takeoff speed and BUR.

The coextruded blown films have an A/B/A structure. The thickness of the layers was 6 µm/48 µm/6 pm.

The compositions of the produced films are shown in table 2.

**Table 2**

| | Layer A | | Layer B | |
|---|---|---|---|---|
| | amount | type | amount | type |
| CEx 1.1 | 100% | LLDPE | 75% | polymer 1 |
| | | | 25% | polymer 3 |
| Ex 1.2 | 100% | LLDPE | 75% | polymer 1 |
| | | | 25% | polymer 5 |
| CEx2.0 | 100% | LLDPE | 100% | polymer 2 |
| CEx 2.1 | 100% | LLDPE | 75% | polymer 2 |
| | | | 25% | polymer 3 |
| Ex 2.2 | 100% | LLDPE | 75% | polymer 2 |
| | | | 25% | polymer 5 |

The films were tested and analysed as is outlined and described above. The results are shown in table 3.

**Table 3**

| | | CEx 1.1 | Ex 1.2 | CEx 2.0 | CEx 2.1 | Ex 2.2 |
|---|---|---|---|---|---|---|
| E-Modulus MD | MPa | 1443 | 1322 | 1201 | 1306 | 1180 |
| E-Modulus TD | MPa | 1359 | 1286 | 1114 | 1120 | 1091 |
| Tensile Strength MD | MPa | 37.0 | 42.6 | 50.0 | 46.0 | 45.9 |
| Tensile Strength TD | MPa | 34.0 | 24.3 | 33.0 | 25.0 | 34.5 |
| Elongation at Break MD | % | 272 | 707 | 791 | 688 | 729 |
| Elongation at Break TD | % | 6.0 | 88.9 | 715 | 5 | 751 |
| Elmendorf Tear Resistance TD | N/mm | 2.0 | 8.3 | 3.0 | 2.0 | 11.4 |
| Elmendorf Tear Resistance MD | N/mm | 1.0 | 2.4 | 1.0 | 1.0 | 3.4 |

The optical properties, i.e. haze and clarity, remained constant or did not change significantly within the series of examples.

## Claims

1. Multilayer structure, comprising
a) at least one layer A comprising an ethylene polymer,
b) at least one layer B comprising a propylene random copolymer having a branching index g' ≤ 0.90, where layer B is immediately adjacent to layer A.

2. Multilayer structure according to claim 1, **characterised in that** the propylene random copolymer has an MFR of 0.1 to 50 g/10 min (230 °C, 2.16 kg).

3. Multilayer structure according to any one of claims 1 or 2, **characterised in that** the propylene random copolymer has an ethylene content of 1 to 6 wt%.

4. Multilayer structure according to any one of claims 1 to 3, **characterised in that** layer B comprises 5 - 50 wt% of the propylene random copolymer having a branching index g' ≤ 0.90 and 50 - 95 wt% of a propylene polymer.

5. Multilayer structure according to claim 4, **characterised in that** layer B comprises 5 - 50 wt% of the propylene random copolymer having a branching index g' ≤ 0.90 and 50 - 95 wt% of a propylene homo- and/or block copolymer.

6. Multilayer structure according to any one of claims 1 to 5, **characterised in that** layer B comprises at least 60 wt% of the sum of the weights of layers A and B.

7. Multilayer structure according to any one of claims 1 to 6, **characterised in that** it is a multilayer pipe.

8. Multilayer structure according to any one of claims 1 to 6, **characterised in that** it is a multilayer film.

9. Multilayer structure according to claim 8, **characterised in that** the multilayer film has a core layer B and two outer layers A.
